# FASCICULE DE BREVET EUROPEEN

(11) **EP 3 359 325 B1**
(45) Date de publication et mention de la délivrance du brevet: **14.08.2019**
(21) Numéro de dépôt: 16788179.6
(22) Date de dépôt: 06.10.2016
(51) Int. Cl.: B23K 26/34, B23K 35/30, B23K 35/32, B29C 45/60, C23C 24/08, B23K 101/20, B23K 103/04

(54) **PROCEDE DE CHARGEMENT, PIECE METALLIQUE CHARGEE OU RECHARGEE**
BESCHICHTUNGSVERFAHREN, BESCHICHTETES ODER WIEDERBESCHICHTETES METALLTEIL
SURFACING PROCESS, SURFACED OR RESURFACED METAL PART

(30) Priorité: 08.10.2015 FR 1559587
(43) Date de publication de la demande: 15.08.2018
(73) Titulaire: Compagnie Générale des Etablissements Michelin, 63000 Clermont-Ferrand (FR); ASSOCIATION POUR LA RECHERCHE DEVELOPPEMENT DES METHODES ET PROCESSUS INDUSTRIELS - A.R.M.I.N.E.S., 75006 Paris (FR); Ecole Nationale d'Ingénieurs de Saint-Etienne, 42100 Saint-Etienne (FR); DMA Laser, 42800 St. Martin La Plaine (FR)
(72) Inventeur: CAPPA, Bernard, 63040 Clermont-Ferrand Cedex 9 (FR); CARLAVAN, Cédric, 63040 Clermont-Ferrand Cedex 9 (FR); COLIN, Christophe, 91000 Evry (FR); JACQUIER, Maryane, 42570 Saint-Heand (FR); SIJOBERT, Julien, 42560 Boisset Saint Priest (FR); THIVILLON, Ludovic, 42800 Saint Martin La Plaine (FR)
(74) Mandataire: Redouté, Gilles Pierre
(86) Numéro de dépôt international: PCT/FR2016/052585
(87) Numéro de publication internationale: WO 2017/060640

(56) Documents cités:
- DE-A1- 4 130 207
- US-A- 5 968 603
- LEUNDA J ET AL: "Laser Cladding of Vanadium-Carbide Tool Steels for Die Repair", PHYSICS PROCEDIA, vol. 12, 31 décembre 2011 (2011-12-31), pages 345-352, XP028379978, ISSN: 1875-3892, DOI: 10.1016/J.PHPRO.2011.03.044 [extrait le 2011-04-15]

## Description

L'invention a pour objet un procédé de chargement ou de rechargement d'une pièce métallique par dépôt assisté par laser d'un matériau d'apport pour réaliser un revêtement abradable de la pièce (voir l'article "Laser Cladding of VanadiumCarbide Tool Steels for Die Repair", de Leunda et al, PHYSICS PROCEDIA, vol. 12, 31 décembre 2011, pages 345-352, qui divulgue le préambule de la revendication 1). L'invention se situe plus spécifiquement dans l'utilisation d'extrudeuses, ou de pressoirs à vis (en anglais : expellers) ou de mélangeurs internes ou d'outils à cylindres qui sont couramment utilisés pour mettre en oeuvre ou sécher ou plastifier ou profiler les produits à base d'élastomères, destinés entre autre à la réalisation de l'ébauche de pneumatiques. Les produits à base d'élastomères peuvent comprendre des particules minérales abrasives et corrosives qui conduisent à une usure de la vis et du fourreau de l'extrudeuse. Différents types de contact sont rencontrés : métal/gomme froide, métal/gomme chaude, métal/métal.

Les matériaux métalliques qui constituent ces différentes familles d'outils doivent répondre à l'ensemble des critères économiques, performance technique et durée de vie. La mise en oeuvre des matériaux ou des élastomères à haut module ou très fortement chargés accélèrent significativement la perte de performance de la machine, suite à une usure prématurée de certains composants dont la durée de vie peut être, dans les cas extrêmes, ramenée à quelques mois. Les outils sont également soumis aux effets abrasifs de la charge renforçante du matériau élastomère. Ces particules dures érodent le métal des outils.

Dans le domaine de l'extrudeuse et de l'expellers, suite au contact de la vis dans son enveloppe, des endommagements par fluage ou adhésion de la matière d'un composant vis-à-vis de son antagoniste sont également observés. Les vis d'extrusion ou les rotors ou les cylindres de telles machines doivent transmettre un couple élevé aux élastomères afin d'assurer leur mise en oeuvre.

Les caractéristiques mécaniques du métal de base de ces pièces ne doivent pas être dégradées par une opération de durcissement localisé à la suite d'un écrouissage pouvant amener à une fissuration dans le cas du contact métal/métal.

Il est déjà connu de chercher à remédier à ces problèmes en chargeant ou rechargeant la périphérie de ces outils, soit avec des matériaux durs déposés par une technique entrainant une dilution d'une partie de la pièce à recharger, soit avec un matériau projeté thermiquement n'engendrant pas de dilution, ou soit avec un traitement de durcissement superficiel de la surface par écrouissage sans dépôt de matière. Les revêtements fusionnés par rechargement du type MIG (Metal Inert Gaz)/MAG (Metal Active Gaz), PTA (Plasma Transfered Arc, plasma à arc transféré), TIG (Tungsten Inert Gaz) ou à l'Arc électrique et par LASER (Light Amplification by Stimulated Emission of Radiation, amplification de la lumière par émission stimulée de rayonnement) occasionnent une élévation de la température de la vis qui peut atteindre voire dépasser sa température de revenu (sur-revenu) et ainsi engendrer une diminution de la résistance mécanique (phénomène d'adoucissement). Ils génèrent donc une zone de dilution plus ou moins importante du substrat assortie d'un affaiblissement de la dureté de la zone de sur-revenu proche de l'interface substrat/rechargement.

Une autre méthode autorise la mise en oeuvre de rechargements (ou de revêtements) par projection thermique à haute vitesse, du type HVOF (High Velocity Oxy-Fuel, Projection par Flamme Supersonique) ou canon à détonation ou cold spray (projection à froid) ou encore par métallisation en phase vapeur par PVD (Physical Vapor Deposition, dépôt physique en phase vapeur) ou CVD (Chemical Vapor Deposition, dépôt chimique en phase vapeur). L'avantage de ces méthodes est la faible élévation de la température du substrat et donc une faible perte de tenue mécanique de la pièce à recharger. En revanche, l'accrochage du revêtement sur le substrat s'opère par ancrage mécanique et incrustation, et non par fusion. De ce fait, l'accrochage du matériau projeté sur le substrat est réduit.

Il existe également une possibilité de durcissement superficiel de la surface par choc laser, grenaillage ou galetage. Ces modes de durcissement ont pour caractéristique essentielle la génération d'une surface qui a une très haute dureté mais le plus souvent sur une faible profondeur, quelques microns à quelques dixièmes de millimètres. Cette faible épaisseur de la couche dure est rédhibitoire pour l'application en extrusion car elle génère une grande sensibilité du procédé à l'écaillage.

L'invention propose un nouveau couple matériau/procédé de rechargement permettant l'obtention d'un revêtement abradable dur, dont les phases dures sont de petites tailles et uniformément réparties dans le revêtement, particulièrement adapté pour ce type d'outils, utilisé dans un domaine qui comporte des conditions d'usage très sévères, tout en pérennisant les performances de ces outils chargés ou rechargés, tant au niveau du matériel neuf qu'à plus long terme avec leur remise à la norme. Aussi, le revêtement de rechargement de la présente invention présente une bonne résistance à l'usure par abrasion et qui plus est, de par la finesse de la microstructure offre une usure uniforme.

### EXPOSE DE L'INVENTION

L'invention a pour objet un procédé de chargement ou de rechargement d'une pièce métallique base fer par dépôt assisté par LASER d'un matériau d'apport pour réaliser un revêtement abradable de la pièce, le procédé étant caractérisé en ce que le matériau d'apport est une poudre ayant la composition élémentaire suivante :

**Tableau 1**

| Elément | % en poids, par rapport au poids total de la poudre |
|---|---|
| C | 0,3 - 2,5 |
| Si | 1,5 - 3,0 |
| B | 0,1 - 3,5 |
| Ni | 3,5 - 5,5 |
| Cr | 5-17 |
| V | 10 -17,5 |
| Fe | > 50% et qsp 100% |

**en ce que** le LASER a une longueur d'onde de service allant de 900 nm à 1100 nm **et en ce** qu'il comprend l'irradiation de la pièce par un faisceau laser telle que l'énergie massique (Em) varie de 5 J/mg à 10 J/mg et que la masse linéique (MI) varie de 25 mg/mm à 55 mg/mm.

La poudre est avantageusement un mélange de deux poudres :
a. une poudre métallique P1, fondant base Fe, de composition suivante :

**Tableau 2**

| Elément | % en poids, par rapport au poids total de la poudre P1 |
|---|---|
| C | 0,3 - 3 |
| Si | 2 - 3,0 |
| B | 2,5 - 4,0 |
| Ni | 4,0 - 6,0 |
| Cr | 12 - 16 |
| Fe | > 50 et qsp 100% |

b. et une poudre céramique P2, réfractaire et dure de composition suivante :

**Tableau 3**

| Elément | % en poids, par rapport au poids total de la poudre P2 |
|---|---|
| C | 10-20 |
| V | 80-90 |

Lorsque la poudre est un mélange d'une poudre P1 et d'une poudre P2, la poudre comprend 10% à 30% en poids de P2 et respectivement 90% à 70% en poids de P1, par rapport au poids total du mélange des deux poudres P1+P2.

### Caractéristiques du procédé :

Le pas, encore dénommé écart-vecteur, varie avantageusement de 2 mm à 4 mm, et le taux de recouvrement varie avantageusement de 50% à 65%.

L'énergie massique (Em) varie avantageusement de 8 J/mg à 11 J/mg ou de 5 J/mg à 8 J/mg et la masse linéique (MI) du dépôt varie avantageusement de 30 mg/mm à 50 mg/mm.

Le spot du LASER a avantageusement un diamètre (∅*l*) variant de 4 mm à 7 mm, plus avantageusement de 5 mm ± 5%.

L'invention concerne également une pièce métallique chargée ou rechargée, comprenant :
- un substrat base fer,
- un revêtement abradable, déposé sur ledit substrat, contenant
∘ plus de 50% en volume d'une matrice à base de Fe,
∘ moins de 50% en volume de phases réfractaires et dures, le revêtement comprend les éléments suivants :

**Tableau 4**

| Elément | % en poids, par rapport au poids total du revêtement |
|---|---|
| C | 0,3 - 2,5 |
| Si | 1,5 - 3,0 |
| B | 0,1 - 3,5 |
| Ni | 3,5 - 5,5 |
| Cr | 5-17 |
| V | 10 -17,5 |
| Fe | > 50% et qsp 100% |

- et, une zone affectée thermiquement (ZAT) dans le substrat, à l'interface substrat/ revêtement, d'une épaisseur inférieure à 2 mm.

Le revêtement a avantageusement, une épaisseur variant de 0,5 mm à 1,2 mm après rectification.

Le revêtement a avantageusement une dureté moyenne supérieure à 750 HV_{0,2}, en particulier supérieure à 770 HV_{0,2}, en particulier supérieure à 800 HV_{0.2}, en particulier supérieure à 850 HV_{0.2}.

La zone affectée thermiquement a avantageusement une épaisseur inférieure à 1,5 mm, en particulier inférieure ou égale à 1,2 mm.

La pièce est avantageusement un cylindre d'extrusion (fourreau), le revêtement étant déposé par rechargement d'une partie d'une face concave du cylindre.

La pièce est avantageusement une vis d'extrusion, le revêtement étant déposé par rechargement de la paroi sommitale d'au moins une partie en relief de la vis d'extrusion.

L'invention a encore pour objet un pré-allié sous forme de poudre, ayant la composition élémentaire suivante :

**Tableau 1**

| Elément | % en poids, par rapport au poids total de la poudre |
|---|---|
| C | 0,3 - 2,5 |
| Si | 1,5 - 3,0 |
| B | 0,1 - 3,5 |
| Ni | 3,5 - 5,5 |
| Cr | 5-17 |
| V | 10 -17,5 |
| Fe | > 50% et qsp 100% |

### DESCRIPTION DES FIGURES

Figure 1 : dispositif de rechargement par LASER avec apport coaxial de matière.
Figure 2 : micrographies prises au MEB en électrons rétrodiffusés du revêtement de l'exemple 1-A: (a) Vue d'une remontée liquide du substrat dans le revêtement au grossissement x200, (b) Vue d'ensemble au grossissement x500, (c) Vue au grossissement x2000, (d) Vue au grossissement x1000, (e) Vue de l'interface revêtement/substrat au grossissement x2000.
Figure 3 : cartographies X des principaux éléments chimiques composant le revêtement de l'exemple 1-A : du haut à gauche vers le bas à droite : Ni, Fe, Mo, Cr, Si, B, C, V, Mn.
Figure 4 : micrographies prises au MEB en électrons rétrodiffusés du revêtement de l'exemple 1-B: (a) Vue de l'interface revêtement/substrat au grossissement x100, (b) intérieur du revêtement au grossissement x500, (c) interface au grossissement x500 et (d) intérieur du revêtement au grossissement x2000.
Figure 5 : cartographies X des principaux éléments chimiques composant le revêtement de l'exemple 1-B : du haut à gauche vers le bas à droite : Ni, Fe, Mo, Cr, Si, B, C, V, Mn.

### DESCRIPTION DES METHODES DE MESURE et DEFINITIONS

### Granulométrie

Dans la présente description, la taille des particules de poudre est exprimée en terme de diamètre médian en volume, d(V; 0,5), noté d50, qui représente le diamètre pour lequel 50 % (en volume) des particules de la poudre ont un diamètre supérieur (ou de manière équivalente, inférieur) à cette valeur.

La granulométrie de la poudre est réalisée avec un morphogranulomètre optique par analyse d'images : ALPAGA 500 NANO (At Line Particle Acquisition for Granulo-morfometric Analysis).

Principe : Un appareil à dispersion sous vide permet de déposer et disperser la poudre sur une lame de verre. Cette lame de verre passe sous un éclairage monochromatique collimaté et un système optique (lentilles télécentriques), les images sont ensuite traitées par un logiciel d'analyse d'images.

### Dureté Vickers

Pour les mesures de dureté, on utilise un indenteur (ou pénétrateur) de forme pyramidale. La pyramide est en diamant et a une base carrée appliquée avec une force F. On mesure la longueur des deux diagonales de l'empreinte (d₁ et d₂), puis on en calcule la moyenne d= (d₁+d₂)/2. La dureté Vickers HV est donnée par : HV = 1,854 × (0,102 F /d²) = 0,189 F/d²; F est exprimée en Newton et d en mm.

La dureté Vickers est notée HVₓ, où x est la force appliquée en Newton multipliée par 0,102 (c'est-à-dire la charge en kgf). Ainsi, HV_{0,1} et HV_{0,2} désignent la dureté Vickers pour une force de 100 gf ou 200 gf, respectivement.

Le pas (la distance) entre les indentations est de 0,2mm. On réalise donc une filiation, c'est-à-dire une succession d'indentations espacées de 0,2mm en partant du haut du rechargement jusque dans le substrat.

La porosité interne des poudres est mesurée à l'aide d'un pycnomètre à gaz.

### Définitions :

Par « énergie massique » notée Em, on désigne, au sens de l'invention, le rapport de la puissance laser (P) par le débit massique de poudre (Dm), soit Em = P/Dm et est communément exprimée en J/mg.

Par « masse linéique » notée MI, on désigne, au sens de l'invention, le rapport du débit massique de poudre (Dm) par la vitesse de balayage du laser (V), soit MI = Dm/V et est communément exprimée en mg/mm.

L'énergie linéique, notée El, correspond à l'énergie massique × la masse linéique (El=Em×Ml).

Par « pas » ou « écart vecteur », on désigne, au sens de l'invention, la distance entre deux traits laser juxtaposés.

Le « taux de recouvrement » (τ_{R}), est calculé par la formule τ_{R} = (L-pas)/L, où L est la largeur du cordon. Les grandeurs L et pas sont exprimées dans la même unité, par exemple en mm.

On parlera de « particules » réfractaires et dures pour la poudre céramique P2 du métal d'apport et de « phases » réfractaires et dures pour le revêtement obtenu, lesquelles phases jouent le rôle de phases renforçantes et qui par ailleurs sont bien plus fines que les particules de la poudre céramique.

Une particule ou une phase est « réfractaire » au sens de la présente invention lorsque la température de fusion du matériau la constituant est supérieure à 1800°C, avantageusement supérieure à 2000°C.

Une particule est « dure » lorsque sa dureté Vickers est supérieure à 800 HV, avantageusement supérieure à 1000 HV.

Par l'expression « carbure de vanadium », on entend désigner, au sens de la présente invention, les carbures de vanadium quelle que soit leur stoechiométrie (en particulier VC et V₂C).

La « poudre », au sens de la présente invention, désigne soit une poudre unique (un pré-allié), soit un mélange de plusieurs poudres (fondant et réfractaire) séparées des unes des autres (pas de mélange intime) ou maintenues les unes avec les autres (agglomérées).

Par « pré-allié sous forme de poudre », on désigne une poudre complètement alliée, généralement obtenue par atomisation de l'alliage fondu tel que défini par la norme ISO 3252 :1999.

« qsp » signifie quantité suffisante pour.

Un substrat métallique base fer est un substrat comprenant plus de 50% en poids de fer, par rapport au poids total du substrat.

L'acier peut être défini comme un matériau composé essentiellement de fer et présentant une teneur en carbone inférieure à 2 % en poids. Il peut encore contenir d'autres éléments. Si l'on ajoute plus de 0,5 % en poids d'éléments d'alliage à l'acier, on parle d'acier allié. Si la teneur de ces éléments d'alliage reste inférieure à 5% en poids, on parlera alors d'acier faiblement allié, et si au moins un de ces éléments d'alliage présente une teneur supérieure à 5% en poids, on parlera alors d'acier fortement allié. Le terme « acier allié » désigne les aciers faiblement et fortement alliés, par exemple les aciers inoxydables.

Le carbone équivalent, Céq, est calculé selon la formule de l'Institut International de Soudure (IIS/IIW), soit: Céq = C + Mn/6 + (Cr + Mo + V)/5 + (Ni + Cu)/15, avec C, Mn, Cr, Mo, V, Ni et Cu représentant le pourcentage massique de chacun de ces éléments dans l'acier.

On entend par « sphéricité », le facteur de sphéricité (un nombre sans dimension) tel que définie par Wadell comme suit : le rapport entre la surface de la sphère de même volume que la particule et la surface de la particule en question (Ψv), équivalent encore au carré du rapport entre le diamètre équivalent en volume et le diamètre équivalent en surface. Une sphéricité de 0,8 correspondant à un cube, une sphéricité de 1,0 correspondant à une sphère.

On entend par « facteur de forme », le rapport entre le diamètre de Féret maximum (distance maximale entre deux tangentes parallèles à des côtés opposés de la particule) et le diamètre de Féret minimum (distance minimale entre deux tangentes parallèles à des côtés opposés de la particule). Ce facteur de forme permet de donner une bonne indication de l'élancement des particules. Un facteur de forme égal à 1 correspond à une sphère. Un facteur de forme égal à √2 correspond à un cube.

### DESCRIPTION DETAILLEE DE L'INVENTION

L'invention a pour objet un procédé de chargement ou de rechargement d'une pièce métallique par dépôt assisté par LASER d'un matériau d'apport pour réaliser un revêtement abradable de la pièce, le procédé étant caractérisé en ce que le matériau d'apport est une poudre ayant la composition élémentaire suivante :

**Tableau 1**

| Elément | % en poids, par rapport au poids total de la poudre |
|---|---|
| C | 0,3 - 2,5 |
| Si | 1,5 - 3,0 |
| B | 0,1 - 3,5 |
| Ni | 3,5 - 5,5 |
| Cr | 10 - 17 |
| V | 10 -17,5 |
| Fe | > 50% et qsp 100% |

**en ce que** le LASER a une longueur d'onde de service allant de 900 nm à 1100 nm **et en ce** qu'il comprend l'irradiation de la pièce par un faisceau laser telle que l'énergie massique (Em) varie de 5 J/mg à 10 J/mg et que la masse linéique (MI) varie de 25 mg/mm à 55 mg/mm.

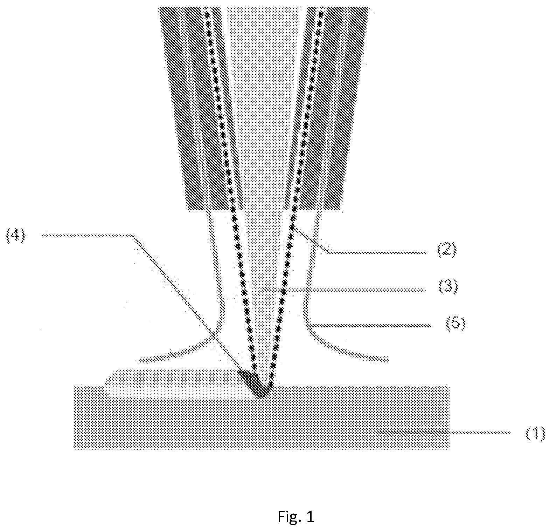

Un schéma de principe d'un rechargement par LASER avec apport de matière est représenté sur la figure 1.

Dans cette figure, le substrat métallique (1) est irradié par un faisceau laser (3) et un jet de poudre véhiculé par un gaz porteur (2) est projeté, au travers d'une buse coaxiale, c'est à dire dans l'axe du faisceau laser. Le matériau d'apport est partiellement fondu lors de son passage dans le faisceau LASER et il se forme un bain fondu (4) en surface du substrat. On protège localement le bain sous gaz neutre (5), tel que par exemple l'argon, l'hélium, les mélanges argon-hélium.

### Matériau d'apport :

La poudre a la composition élémentaire donnée dans le tableau 1.

Le fer est l'élément majoritaire et sera constitutif de la phase dénommée fondant. Les éléménts bore et silicium permettent d'en abaisser la température de fusion.

La poudre comprend de 10 % en poids à 17 % en poids, avantageusement de 10% à 15% en poids, par rapport au poids total de la poudre, d'élément Cr de façon à ce que le revêtement résiste à la corrosion.

La poudre comprend également du nickel qui est un élément gamma-gène et assure une bonne ductilité et qui combiné au chrome garantit une pénétration de trempe élevée.

Le matériau d'apport comprend également des particules réfractaires et dures, qui sont avantageusement des carbures de vanadium.

Le matériau d'apport comprend également du carbone, qui peut être sous la forme de carbone libre à la surface des carbures de vanadium.

Le matériau d'apport est sous forme pulvérulente. La poudre peut être une poudre unique, un mélange de plusieurs poudres séparées ou un mélange de poudres agglomérées.

Le matériau d'apport comprend avantageusement une poudre de fondant métallique base fer et une poudre réfractaire et dure. La poudre réfractaire est encore dénommée « renfort ».

En particulier, le matériau d'apport est un mélange
a. d'une poudre métallique P1, fondant base Fe, de composition suivante :

**Tableau2**

| Elément | % en poids, par rapport au poids total de la poudre P1 |
|---|---|
| C | 0,3 - 3 |
| Si | 2 - 3,0 |
| B | 2,5 - 4,0 |
| Ni | 4,0 - 6,0 |
| Cr | 12 - 16 |
| Fe | > 50 et qsp 100% |

b. et d'une poudre céramique P2, réfractaire et dure de composition suivante :

**Tableau 3**

| Elément | % en poids, par rapport au poids total de la poudre P2 |
|---|---|
| C | 10-20 |
| V | 80-90 |

Dans cette variante, le matériau d'apport est une poudre qui comprend avantageusement 10% à 30% en poids de poudre P2 et respectivement 90% à 70% en poids de poudre P1, par rapport au poids total du mélange des deux poudres P1+P2. Le mélange de poudres comprend avantageusement 10% à 20% en poids de poudre P2 et respectivement 90% à 80% en poids de poudre P1, par rapport au poids total du mélange des deux poudres P1+P2.

La poudre unique ou chacune des deux poudres du mélange ont avantageusement un d50 allant de 40 µm à 70 µm, plus avantageusement de 45 µm à 55 µm.

Pour une meilleure uniformité du faisceau de poudres, les deux poudres, P1 et P2, du mélange doivent avoir une répartition granulométrique relativement voisine.

Pour un meilleur écoulement de la poudre ou du mélange de poudres à travers le distributeur et la buse, la ou les poudres est (sont) avantageusement sphérique(s), avec une sphéricité comprise entre 0,8 et 1,0 et un facteur de forme compris entre 1 et √2.

La poudre céramique, P2, présente avantageusement une dureté Vickers variant de 2000 HV_{0,1} à 3000 HV_{0,1}, plus avantageusement de 2200 HV_{0,1} à 2800 HV_{0,1}. De préférence, cette poudre céramique P2 a une granulométrie telle que d50 varie de 40 µm à 70 µm, avantageusement de 45 µm à 55 µm. Dans un mode d'élaboration particulière, on effectue un tamisage du mélange à 63 µm.

Dans un mode d'élaboration particulière, la poudre P2 est sphérique, avantageusement avec une sphéricité comprise entre 0,8 et 1,0 et un facteur de forme compris entre 1 et √2.

Avantageusement, la porosité interne de la poudre P2 ne dépasse pas 1,0%, plus avantageusement 0,5% et au mieux 0,2%.

La poudre P1, fondant base fer, a avantageusement une dureté Vickers variant de 800 HV_{0,2} à 1400 HV_{0,2}, plus avantageusement de 950 HV_{0,2} à 1250 HV_{0,2}.

Avantageusement, la porosité interne de la poudre P1 ne dépasse pas 1,0%, plus avantageusement 0,5% et au mieux 0,2%.

D'une manière avantageuse, la proportion de poudre réfractaire P2 peut être entièrement remise en solution dans la poudre métallique P1 lors de son passage en phase liquide à la suite de l'interaction avec le faisceau LASER. Ainsi, il est possible de mettre en solution, sans la faire fondre, la poudre réfractaire, comprenant les carbures, dans le fondant liquide.

Par conséquent, au lieu d'utiliser un mélange de deux poudres, poudre métallique et poudre céramique, il est également envisageable de préparer un pré-allié, dans les proportions massiques souhaitées, par la mise en solution des éléments de la poudre céramique dans la solution de la poudre métallique. Ce pré-allié sera ensuite avantageusement atomisé pour préparer une poudre unique et sphérique.

La poudre du matériau d'apport présente avantageusement un intervalle de solidification variant de 250°C à 400°C, plus avantageusement de 250°C à 300°C.

Les poudres métalliques fondant base fer et céramique sont disponibles dans le commerce, soit séparées soit déjà mélangées.

### Substrat

La pièce métallique à recharger est un substrat base fer. La pièce métallique à recharger est avantageusement en acier, en acier allié ou en fonte. La pièce métallique a avantageusement une valeur de carbone équivalent, C_{eq}, inférieure à 0,80.

La pièce métallique à recharger peut tout particulièrement être en acier 15CDV6 recuit, en particulier du 15CDV6 trempée ou dans un état trempé puis revenu.

### Procédé de rechargement

Le procédé selon l'invention se caractérise en ce que l'énergie massique (Em) varie de 5 J/mg à 10 J/mg et en ce que la masse linéique (Ml) varie de 25 mg/mm à 55 mg/mm.

L'énergie massique varie plus avantageusement de 8 J/mg à 11 J/mg ou de 5 J/mg à 8 J/mg.

La masse linéique varie avantageusement de 30 mg/mm à 50 mg/mm.

Le pas, encore dénommé écart-vecteur, varie avantageusement de 2mm à 4 mm, plus avantageusement de 2,5 mm à 4 mm, encore plus avantageusement de 2,5 mm à 3,5 mm. La largeur du cordon varie avantageusement de 4 mm à 8 mm, plus avantageusement de 5 mm à 7 mm, encore plus avantageusement de 5,5 mm à 6,5 mm. Le taux de recouvrement varie avantageusement de 50% à 65%, plus avantageusement de 55% à 60%.

Avantageusement, le dépôt d'une seule couche est suffisant.

Ces conditions permettent l'application d'un revêtement de dureté uniforme, suffisamment épais mais qui ne présente pas de fissures néfastes aux propriétés mécaniques futures. En effet, le revêtement de rechargement présente une dureté uniforme (phases dures de très petites tailles et réparties de façon homogène) et donc une usure uniforme contrairement à certains matériaux de rechargement pour lesquels les phases dures sont de grandes tailles.

Ces conditions permettent également la juxtaposition de plusieurs cordons les uns à côté des autres sur une épaisseur relativement régulière et plane.

Le LASER présente avantageusement une longueur d'onde de service allant de 900 nm à 1100 nm. Un tel laser peut par exemple être un laser Nd: YAG de longueur d'onde de service de 960 nm.

Le spot du LASER a avantageusement un diamètre variant de 4 mm à 7 mm, plus avantageusement de 5 mm ± 5%.

Avantageusement, l'une au moins des conditions suivantes est respectée :
a. le rapport de la puissance du faisceau LASER sur la vitesse de balayage du faisceau LASER varie de 2.10⁵ kg.m.s⁻² (200J/mm)à 4.10⁵ kg.m.s⁻² (400J/mm) ;
b. le rapport de la puissance du faisceau LASER sur la vitesse de balayage du faisceau LASER varie de 2,5.10⁵ kg.m.s⁻² (250J/mm) à 3,5.10⁵ kg.m.s⁻² (350J/mm), de préférence sensiblement égale à 3.10⁵ kg.m.s⁻² (300J/mm) ;
c. le rapport du débit massique de poudre sur la vitesse de balayage du faisceau LASER est compris entre 25 et 55 mg.mm⁻¹, avantageusement entre 30 et 50 mg.mm⁻¹;
d. la vitesse de balayage du faisceau LASER varie de 2 mm.s⁻¹ (120 mm/min) à 20 mm.s⁻¹ (1200 mm/min), en particulier de 5 mm.s⁻¹ (300 mm/min) à 13,33 mm.s⁻¹ (800 mm/min);
e. le faisceau LASER a une puissance variant de 1 kW à 5 kW, en particulier de 1,5 kW à 4 kW ;
f. le débit massique de poudre varie de 10 g.min⁻¹ à 40 g.min⁻¹, en particulier de 14 g.min⁻¹ à 26 g.min⁻¹.

Plus avantageusement, l'ensemble de ces conditions sont respectées.

Dans une première variante,
- la masse linéique varie de 43 mg/mm à 50 mg/mm
- l'énergie massique varie de 6 J/mg à 7 J/mg
- l'écart vecteur est de 3 mm ou de 3,5 mm
- le taux de recouvrement varie de 55% à 60%
- le diamètre du spot est de 5 mm
Avantageusement, le LASER est un LASER Nd :YAG, et les conditions opératoires suivantes sont respectées :
- La vitesse de balayage du faisceau laser varie de 3 mm.s⁻¹ (180 mm/min) à 7 mm.s⁻¹ (420 mm/min);
- La puissance du faisceau laser varie de 1 kW à 2 kW ; et
- Le débit massique de poudre varie de 10 g.min⁻¹ à 20 g.min⁻¹

Dans une deuxième variante,
- la masse linéique varie de 29 mg/mm à 36 mg/mm
- l'énergie massique varie de 8,5 J/mg à 10 J/mg
- l'écart vecteur est de 3 mm ou de 3,5 mm
- le taux de recouvrement varie de 55% à 60%
- le diamètre du spot est de 5 mm
Avantageusement, le LASER est un LASER Nd :YAG, et les conditions opératoires suivantes sont respectées :
- La vitesse de balayage du faisceau laser varie de 10 mm.s⁻¹ (600 mm/min) à 15 mm.s⁻¹ (900 mm/min);
- La puissance du faisceau laser varie de 3 kW à 5 kW ; et
- Le débit massique de poudre varie de 20 g.min⁻¹ à 30 g.min⁻¹

La poudre est avantageusement véhiculée par de l'hélium (gaz porteur). La zone d'irradiation est avantageusement protégée par un gaz protecteur, avantageusement l'argon.

Par le procédé selon l'invention, un revêtement ayant les propriétés recherchées peut être obtenu par la projection d'une seule couche. Ainsi, dans le procédé, on applique avantageusement une couche.

Il est par ailleurs possible de chauffer ou préchauffer la pièce métallique lors de l'étape de rechargement et si possible en deçà de la température de revenu visée. Avantageusement, on n'effectue pas de pré-chauffage.

Le moyen de chauffage peut être tout moyen adapté, notamment le laser de projection, un inducteur, un four de pré-chauffage. Lorsqu'un pré-chauffage est conduit, la température de préchauffage varie par exemple de 350°C à 600°C, avantageusement de 400°C à 550°C.

### Revêtement abradable obtenu

Le revêtement obtenu, déposé et lié métallurgiquement au substrat base fer, comprendra lui aussi une matrice base fer mais également des phases réfractaires et dures.

Le revêtement contient :
∘ plus de 50% en volume d'une matrice à base de Fe
∘ moins de 50% en volume de phases réfractaires Le revêtement comprend avantageusement les éléments suivants :

**Tableau 4**

| Elément | % en poids, par rapport au poids total du revêtement |
|---|---|
| C | 0,3 - 2,5 |
| Si | 1,5 - 3,0 |
| B | 0,1 - 3,5 |
| Ni | 3,5 - 5,5 |
| Cr | 5 - 17 |
| V | 10 - 17,5 |
| Fe | > 50% et qsp 100% |

La matrice comprend avantageusement les éléments suivants : Fe, Cr, Si, Ni, et éventuellement des traces de V, C, B et des traces d'éléments d'alliage du substrat qui n'appartiennent ni au fondant, ni au matériau d'apport.

La proportion en phases réfractaires et dures, dans le revêtement, varie avantageusement de 15 % à 50 % en volume, par rapport au volume total du revêtement.

Les phases réfractaires et dures comprennent avantageusement des carbures de vanadium, dont la stoechiométrie peut largement varier, et des borures, en particulier des borures de chrome. Les carbures de vanadium sont le plus souvent de forme équiaxe. Les carbures de vanadium peuvent contenir des quantités plus ou moins importantes de chrome. En effet, les carbures de vanadium du matériau d'apport sont remis en solution lors du rechargement et les atomes de chrome, éventuellement présents dans le matériau d'apport, qui sont des éléments très proches du vanadium en termes de rayon atomique, peuvent venir s'insérer dans la structure cristalline des carbures de vanadium. Ces carbures de vanadium ont avantageusement une taille variant de 1 µm à 5 µm, plus avantageusement inférieure ou égale à 2 µm.

Les phases réfractaires et dures du revêtement comprennent également des borures, en particulier des borures de chrome. Les borures de chrome sont en forme plus ou moins d'étoile. Ces borures peuvent contenir l'élément vanadium, qui se sera inséré dans la structure cristalline lors de la mise en solution de la poudre réfractaire dans le fondant liquide.

Ces borures ont avantageusement une taille variant de 3 µm à 15 µm, plus avantageusement variant de 8 µm à 12 µm.

Les phases réfractaires et dures sont distribuées de façon homogène dans la matrice.

Le revêtement obtenu a avantageusement une dureté moyenne supérieure à 750 HV_{0,2}, en particulier supérieure à 770 HV_{0,2}, en particulier supérieure à 800 HV_{0,2}, en particulier supérieure à 850 HV_{0,2}. Le revêtement obtenu a avantageusement une dureté moyenne inférieure à 1200 HV_{0,2}. Plus particulièrement, le revêtement obtenu a avantageusement une dureté moyenne allant de 750 HV_{0,2} à 1200 HV_{0,2}, plus avantageusement de 750 HV_{0,2} à 1000 HV_{0,2}, plus avantageusement de 750 HV_{0,2} à 950 HV_{0,2}.

Un avantage du procédé selon la présente invention est que lors de son dépôt, les particules réfractaires du matériau d'apport vont être dissoutes c'est-à-dire mises en solution, après la fusion du fondant. On obtient ainsi un revêtement d'épaisseur uniforme et de microstructure fine et homogène, en particulier en ce qui concerne la répartition et la taille des phases réfractaires et dures qui précipitent à l'intérieur du revêtement.

Un autre avantage significatif de ce procédé, est que l'épaisseur de la zone affectée thermiquement est très faible. Ainsi, dans le substrat, la zone affectée thermiquement a avantageusement une épaisseur inférieure à 2 mm, en particulier inférieure ou égale à 1,5 mm, plus particulièrement inférieure ou égale à 1,2 mm.

L'épaisseur de la zone diluée, formant l'interface substrat/revêtement, est avantageusement inférieure à 250µm. L'épaisseur de cette zone diluée est au minimum l'épaisseur nécessaire pour assurer une liaison (avantageusement au moins 30 µm), mais est maintenue la plus faible possible afin d'éviter une dilution du substrat et éviter l'apparition dans le revêtement d'éléments métalliques provenant du substrat. L'épaisseur de la zone diluée varie avantageusement de 3% de l'épaisseur du revêtement déposé, avant rectification, à 5% de l'épaisseur du revêtement déposé, avant rectification.

Le revêtement a, à l'issu du procédé, une épaisseur avantageusement variant de 1,0 mm à 3 mm, et plus particulièrement de 1,2 mm à 2 mm, en particulier de 1,5 mm à 1,8 mm. Cette épaisseur correspond avantageusement à l'épaisseur de la couche unique déposée. Le procédé peut comprendre une étape supplémentaire de rectification de ce revêtement pour atteindre une épaisseur recherchée, qui varie avantageusement de 0,5 mm à 1,2 mm. Cette épaisseur correspond avantageusement à l'épaisseur de la couche unique déposée.

### Pièce métallique chargée ou rechargée

L'invention a également pour objet une pièce métallique chargée ou rechargée, comprenant :
- un substrat base fer, en particulier en acier, en acier allié ou en fonte,
- un revêtement abradable, déposé sur ledit substrat, contenant
∘ plus de 50% en volume d'une matrice à base de Fe
∘ moins de 50% en volume de phases réfractaires,
Le revêtement comprend les éléments suivants :

**Tableau 4**

| Elément | % en poids, par rapport au poids total du revêtement |
|---|---|
| C | 0,3 - 2,5 |
| Si | 1,5 - 3,0 |
| B | 0,1 - 3,5 |
| Ni | 3,5 - 5,5 |
| Cr | 5 - 17 |
| V | 10 -17,5 |
| Fe | > 50% et qsp 100% |

- et, une zone affectée thermiquement (ZAT) dans le substrat, à l'interface substrat/revêtement, d'une épaisseur inférieure à 2 mm.

Le substrat est tel que décrit précédemment.

La pièce est avantageusement une pièce d'extrudeuse, ou d'expeller ou de mélangeur interne ou d'outil à cylindres. La pièce est avantageusement un cylindre d'extrusion, le revêtement étant déposé par rechargement d'une partie d'une face concave du cylindre. La pièce est avantageusement une vis d'extrusion, le revêtement étant déposé par rechargement de la paroi sommitale d'au moins une partie en relief de la vis d'extrusion.

Le revêtement est tel que décrit précédemment. Il a avantageusement une épaisseur variant de 0,5 mm à 1,2 mm après rectification. Cette épaisseur correspond avantageusement à l'épaisseur de la couche unique déposée.

L'invention a également pour objet la pièce métallique rechargée obtenue par le procédé selon l'invention.

Les pièces métalliques, chargées ou rechargées, selon l'invention ou obtenues par le procédé selon l'invention, présentent les propriétés recherchées, en particulier :
- une bonne résistance à l'usure, le revêtement présentant une dureté uniforme sur toute sa profondeur et présentant pas ou peu de fissures, avec une propagation de fissures difficile ou non-critique vis-à-vis de l'orientation des fissures observées (absence de délaminage),
- une bonne résistance au cisaillement, le revêtement ayant adhéré à la pièce métallique par la formation d'une zone diluée d'épaisseur modérée (avantageusement inférieure à 250µm) amenant à l'établissement d'une bonne liaison métallurgique dans la mesure où matériau d'apport et pièce métallique sont métallurgiquement compatibles. Aussi, le revêtement ne peut être cisaillé ou entraîné lors de son contact avec la gomme plastique (caoutchouc ou élastomère).
L'invention a également pour objet un pré-allié sous forme de poudre, ayant la composition élémentaire suivante :

**Tableau 1**

| Elément | % en poids, par rapport au poids total de la poudre |
|---|---|
| C | 0,3 - 2,5 |
| Si | 1,5 - 3,0 |
| B | 0,1 - 3,5 |
| Ni | 3,5 - 5,5 |
| Cr | 5 - 17 |
| V | 10 -17,5 |
| Fe | > 50% et qsp 100% |

La poudre comprend avantageusement de 10% à 15% en poids, par rapport au poids total de la poudre, d'élément Cr.

Cette poudre pré-alliée peut notamment être préparée par mise en solution, par chauffage, sans fusion d'une poudre céramique réfractaire, telle que définie précédemment, dans une poudre métallique liquide, telle que définie précédemment. Le liquide homogène ainsi obtenu sera ensuite avantageusement atomisé pour préparer une poudre unique et sphérique.

La poudre est avantageusement une poudre pré-alliée dont les particules présentent une sphéricité entre 0,8 et 1,0 et un facteur de forme entre 1 et √2, chaque particule de poudre présentant une composition moyenne sensiblement identique.

De préférence, ce facteur de sphéricité est supérieur à 0,82, avantageusement supérieur à 0,85, et encore plus avantageusement supérieur à 0,90 avec une situation encore plus avantageuse lorsque ce facteur de sphéricité est supérieur à 0,95.

De préférence, ce facteur de forme est inférieur à 1,3, avantageusement inférieur à 1,25, et encore plus avantageusement inférieur à 1,15 avec une situation encore plus avantageuse lorsque ce facteur de forme est inférieur à 1,05.

### EXEMPLES

Les essais suivants ont été conduits selon les conditions opératoires suivantes :
- Substrat : acier allié 15CDV6 à l'état recuit
- Machine de rechargement : LASER Nd-YAG, TLC7040 de chez Trumpf, Laser DISK : trudisk4001 (4 kWatt), Tête MSO-LMD, Buse SO16 (3 jets à 120°) distance de travail 16 mm, Fibre optique double coeur 100µm/400µm

On utilise une poudre de composition suivante (Tableau 5, les pourcentages sont exprimés en poids) :

**Tableau 5**

| C | Si | B | Ni | Cr | V | Fe |
|---|---|---|---|---|---|---|
| 1,8 | 2,5 | 2,9 | 4,3 | 11,0 | 12,2 | 65,3 |

### Exemple 1-A :

Les paramètres opératoires sont les suivants (Tableau 6) :

**Tableau 6**

| Diamètre du faisceau laser | Vitesse de balayage du laser | Puissance laser | Pas | Débit massique de poudre | | Débit He | Débit Ar | Nombre de couche | Hauteur du revêtement |
|---|---|---|---|---|---|---|---|---|---|
| mm | mm/min | Watts | mm | tr/min | g/min | L/min | L/min | | mm |
| 5 | 800 | 4000 | 3 | 4 | 26 | 5 | 10 | 1 | 1,8 |

Et ainsi :
- Energie massique (Eₘ) : 9,23 J/mg
- Masse linéique (Ml) : 32,5 mg/mm
- Energie linéique (Eₗ) : 300 J/mm

On obtient un revêtement à microstructure fine et homogène, d'épaisseur 1,8 mm (avant rectification) et de dureté moyenne 789 HV_{0,2}, uniforme sur toute la profondeur du revêtement.

Le revêtement ne présente pas de fissure impropre à l'utilisation future recherchée. L'épaisseur de la zone affectée thermiquement est de 1200 µm.

Le revêtement comprend en tant que phases réfractaires des carbures de vanadium enrichis en chrome et leurs tailles ne dépassent pas 2 µm.

Concernant la matrice, trois phases peuvent être distinguées :
- une solution solide riche en Fe, Cr, Si et Ni avec un peu de B,
- des phases arborescentes riches en Fe et en Si avec un peu de Ni,
- des zones biphasées, constituées de l'association de deux phases lamellaires, (de formes géométriques et anguleuses) composées très certainement d'une phase borure de Cr et d'une phase riche en Fe et en Si.

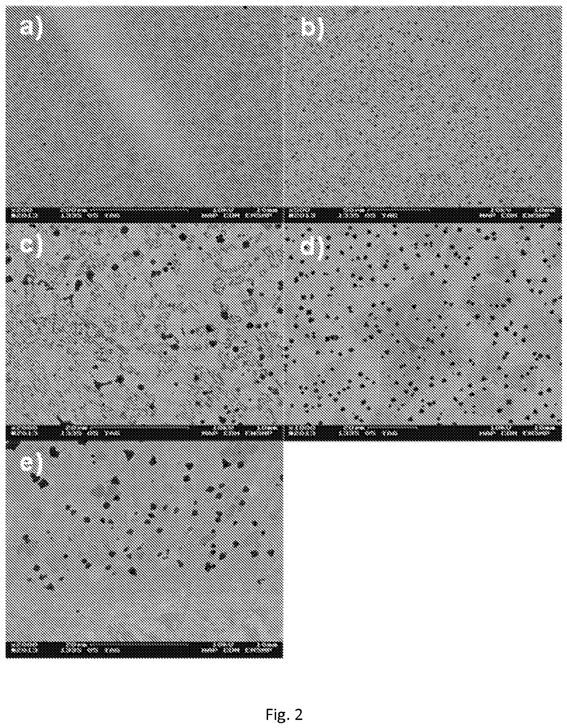

La figure 2 représente les micrographies prises au MEB en électrons rétrodiffusés du revêtement de l'exemple 1-A: (a) Vue d'une remontée liquide du substrat dans le revêtement au grossissement x200, (b) Vue d'ensemble au grossissement x500, (c) Vue au grossissement x2000, (d) Vue au grossissement x1000, (e) Vue de l'interface revêtement/substrat au grossissement x2000.

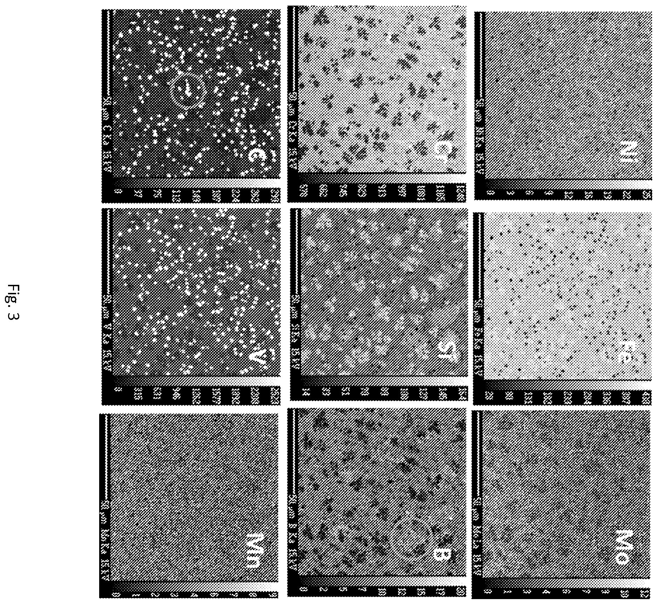

La figure 3 représente les cartographies X des principaux éléments chimiques composant le revêtement de l'exemple 1-A : du haut à gauche vers le bas à droite : Ni, Fe, Mo, Cr, Si, B, C, V, Mn. Sur la cartographie de l'élément Si, on a entouré des phases arborescentes riches en Fe, Si avec un peu de Ni. Sur la cartographie de l'élément B, on a entouré des phases eutectiques riches en B, Cr, Si et Fe avec présence d'un borure de chrome BxCry et d'une phase riche en Fe et Si. Sur la cartographie de l'élément C, on a entouré des carbures de vanadium riches en Cr de type Cx(V,Cr)y.

Les caractéristiques de dureté et dimensionnelles du revêtement, de la ZAT et du substrat sont reportées dans le Tableau 7 suivant :

**Tableau 7**

| | | Charge (kg) | Diagonales (µm) | Dureté Vickers (kgf/mm²) | Epaisseur (µm) |
|---|---|---|---|---|---|
| Revêtement | | 0,2 | 21,7 ± 0,9 | 789 ± 59 | 1800 |
| Zone Affectée Thermiquement (ZAT) | Proche du revêtement | 0,2 | 30,8 ± 0,5 | 392 | 1200 |
| | Proche du substrat | | 43, 5 ± 0,4 | 197 | |
| Substrat (15CDV6) | | 0,2 | 44 ± 1,2 | 192 ± 10 | - |

### Exemple 1-B :

Les paramètres opératoires sont les suivants (Tableau 8) :

**Tableau 8**

| Diamètre du faisceau laser | Vitesse de balayage du laser | Puissance laser | Pas | Débit massique de poudre | | Débit He | Débit Ar | Nombre de couche | Hauteur du revêteme nt |
|---|---|---|---|---|---|---|---|---|---|
| mm | mm/min | Watts | mm | tr/min | g/min | L/min | L/min | | mm |
| 5 | 300 | 1500 | 3 | 2,1 | 14 | 5 | 10 | 1 | 1,8 |

Et ainsi :
- Energie massique (Eₘ) : 6,43 J/mg
- Masse linéique (Mₗ) : 46,7 mg/mm
- Energie linéique (Eₗ) : 300 J/mm

On obtient un revêtement à microstructure moins fine mais homogène, d'épaisseur 1,8 mm (avant rectification) et de dureté moyenne 893 HV_{0,2}, uniforme sur toute la profondeur du revêtement.

Le revêtement ne présente pas de fissure rédhibitoire à l'utilisation future recherchée. L'épaisseur de la zone affectée thermiquement est de 1200 µm.

Le revêtement comprend en tant que phases réfractaires des carbures de vanadium enrichis en chrome avec des tailles ne dépassant pas 2 µm mais il comprend également des borures de chrome riches en vanadium d'assez grande taille (∼10µm), soit d'une taille 5 fois plus grande que les carbures de vanadium.

La matrice se compose :
- d'une solution solide riche en Fe, Cr, Si et Ni avec un peu de B,
- de phases arborescentes riches en Fe et en Si avec un peu de Ni,
- des zones biphasées, constituées de l'association de deux phases lamellaires, (de formes géométriques et anguleuses) composées très certainement d'une phase borure de Cr et d'une phase riche en Fe et en Si.

Par rapport à l'exemple 1-A, ces zones biphasées sont beaucoup moins abondantes dans la matrice mais si elles le sont, elles se présentent sous une forme beaucoup moins géométrique.

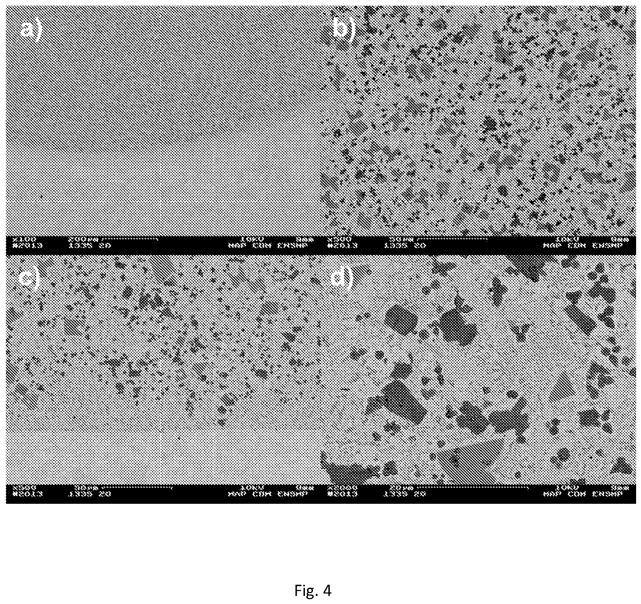

La figure 4 représente les micrographies prises au MEB en électrons rétrodiffusés du revêtement de l'exemple 1-B: (a) Vue de l'interface revêtement/substrat au grossissement x100, (b) intérieur du revêtement au grossissement x500, (c) interface au grossissement x500 et (d) intérieur du revêtement au grossissement x2000.

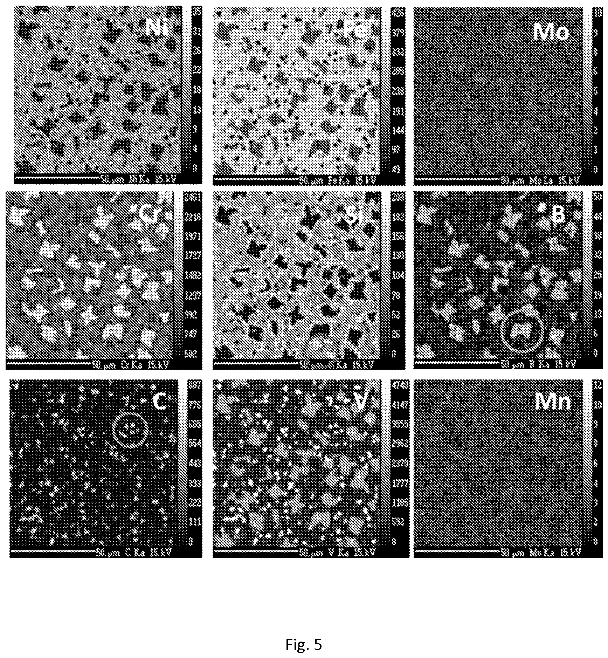

La figure 5 représente les cartographies X des principaux éléments chimiques composant le revêtement de l'exemple 1-B : du haut à gauche vers le bas à droite : Ni, Fe, Mo, Cr, Si, B, C, V, Mn. Sur la cartographie de l'élément Si, on a entouré des phases arborescentes riches en Fe, Si avec un peu de Ni. Sur la cartographie de l'élément B, on a entouré des borures riches en Cr et V, de grande taille. Sur la cartographie de l'élément C, on a entouré des carbures de vanadium de petite taille.

Les caractéristiques de dureté et dimensionnelles du revêtement, de la ZAT et du substrat sont reportées dans le Tableau 9 suivant :

**Tableau 9**

| | | Charge (kg) | Diagonales (µm) | Dureté Vickers (kgf/mm²) | Epaisseur (µm) |
|---|---|---|---|---|---|
| Revêtement | | 0,2 | 20,4 ± 0,9 | 893 ± 76 | 1800 |
| Zone Affectée Thermiquement (ZAT) | Proche du revêtement | 0,2 | 29,8 ± 0,2 | 418 | 1200 |
| | Proche du substrat | | 45, 0 ± 0,4 | 183 | |
| Substrat (15CDV6) | | 0,2 | 43,9± 0,7 | 192 ± 5 | - |

Les exemples 1-A et 1-B correspondent à une même énergie par mm de faisceau déplacé (énergie linéique). D'un essai à l'autre, la hauteur du revêtement (plus importante quand la masse linéique est plus importante) et la microstructure du revêtement, en particulier la quantité de borures formés, seront différentes.

L'exemple 1-A correspond à des conditions qui peuvent être qualifiées de « chaudes » (forte énergie massique), l'exemple 1-B correspond à des conditions qui peuvent être qualifiées de « froides » (faible énergie massique).

## Revendications

1. Procédé de chargement ou de rechargement d'une pièce métallique par dépôt assisté par LASER d'un matériau d'apport pour réaliser un revêtement abradable de la pièce, le procédé étant **caractérisé en ce que** le matériau d'apport est une poudre ayant la composition élémentaire suivante :
**Tableau 1**
| Elément | % en poids, par rapport au poids total de la poudre |
|---|---|
| C | 0,3 - 2,5 |
| Si | 1,5 - 3,0 |
| B | 0,1 - 3,5 |
| Ni | 3,5 - 5,5 |
| Cr | 5 - 17 |
| V | 10 - 17,5 |
| Fe | > 50% et qsp 100% |
**en ce que** le LASER a une longueur d'onde de service allant de 900 nm à 1100 nm **et en ce qu'**il comprend l'irradiation de la pièce par un faisceau laser telle que l'énergie massique (Em), rapport de la puissance laser par le débit massique de poudre, varie de 5 J/mg à 10 J/mg et que la masse linéique (Ml), rapport du débit massique de poudre par la vitesse de balayage du laser, varie de 25 mg/mm à 55 mg/mm.

2. Procédé selon la revendication 1, dans lequel la poudre est un mélange
a. d'une poudre métallique P1, fondant base Fe, de composition suivante :
**Tableau 2**
| Elément | % en poids, par rapport au poids total de la poudre P1 |
|---|---|
| C | 0,3 - 3 |
| Si | 2 - 3,0 |
| B | 2,5 - 4,0 |
| Ni | 4,0 - 6,0 |
| Cr | 12 - 16 |
| Fe | > 50 et qsp 100% |
b. et d'une poudre céramique P2, réfractaire et dure de composition suivante :
**Tableau 3**
| Elément | % en poids, par rapport au poids total de la poudre P2 |
|---|---|
| C | 10 - 20 |
| V | 80 - 90 |
et préférentiellement d'une dureté Vickers variant de 2000 HV_{0,1} à 3000 HV_{0,1}.

3. Procédé selon l'une quelconque des revendications 1 et 2, dans lequel la poudre P1 a une dureté Vickers variant de 800 HV_{0,2} à 1400 HV_{0,2}.

4. Procédé selon l'une quelconque des revendications 2 et 3, dans lequel la poudre comprend 10% à 30% en poids de P2 et respectivement 90% à 70% en poids de P1, par rapport au poids total du mélange des deux poudres P1+P2.

5. Procédé selon l'une quelconque des revendications précédentes, dans lequel le pas varie de 2,5 mm à 4mm et le taux de recouvrement varie de 50% à 65%.

6. Procédé selon l'une quelconque des revendications précédentes, dans lequel l'énergie massique varie de 8 J/mg à 11 J/mg ou de 5 J/mg à 8 J/mg et la masse linéique du dépôt varie de 30 mg/mm à 50 mg/mm.

7. Procédé selon l'une quelconque des revendications précédentes, dans lequel le spot du LASER a un diamètre variant de 4mm à 7mm.

8. Pièce métallique chargée ou rechargée, comprenant :
- un substrat base fer,
- un revêtement, déposé sur ledit substrat, contenant
∘ plus de 50% en volume d'une matrice à base Fe,
∘ moins de 50% en volume de phases réfractaires et dures, le revêtement ayant la composition élémentaire suivante:
**Tableau 4**
| Elément | % en poids, par rapport au poids total du revêtement |
|---|---|
| C | 0,3 - 2,5 |
| Si | 1,5 - 3,0 |
| B | 0,1 - 3,5 |
| Ni | 3,5 - 5,5 |
| Cr | 5 - 17 |
| V | 10 - 17,5 |
| Fe | > 50% et qsp 100% |
- et, une zone affectée thermiquement (ZAT) dans le substrat, à l'interface substrat/revêtement, d'une épaisseur inférieure à 2 mm.

9. Pièce selon la revendication 8, dans laquelle le revêtement a une épaisseur variant de 0,5 mm à 1,2 mm après rectification.

10. Pièce selon l'une quelconque des revendications 8 à 9, dans laquelle les phases réfractaires et dures sont des carbures de vanadium dont la taille est préférentiellement inférieure ou égale à 2,5 µm, et des borures de chrome dont la taille varie préférentiellement entre 3 µm et 15 µm.

11. Pièce selon l'une quelconque des revendications 8 à 10, dans laquelle le revêtement a une dureté moyenne supérieure à 750 HV_{0,2}, en particulier supérieure à 770 HV_{0,2}, en particulier supérieure à 800 HV_{0.2}, en particulier supérieure à 850 HV_{0.2}.

12. Pièce selon l'une quelconque des revendications 8 à 11, dans laquelle la zone affectée thermiquement a une épaisseur inférieure à 1,5 mm, en particulier inférieure ou égale à 1,2 mm.

13. Pièce selon l'une quelconque des revendications 8 à 12, dans laquelle la pièce est un cylindre d'extrusion, le revêtement étant déposé par rechargement d'une partie d'une face concave du cylindre.

14. Pièce selon l'une quelconque des revendications 8 à 12, dans laquelle la pièce est une vis d'extrusion, le revêtement étant déposé par rechargement de la paroi sommitale d'au moins une partie en relief de la vis d'extrusion.

15. Poudre complètement alliée, ayant la composition élémentaire suivante :
**Tableau 1**
| Elément | % en poids, par rapport au poids total de la poudre |
|---|---|
| C | 0,3 - 2,5 |
| Si | 1,5 - 3,0 |
| B | 0,1 - 3,5 |
| Ni | 3,5 - 5,5 |
| Cr | 5 - 17 |
| V | 10 - 17,5 |
| Fe | > 50% et qsp 100% |

## Patentansprüche

1. Verfahren zum Beschichten oder Wiederbeschichten eines Metallteils durch lasergestütztes Aufbringen eines Zusatzwerkstoffs zum Ausführen einer Einlaufschicht des Teils, wobei das Verfahren **dadurch gekennzeichnet ist, dass** der Zusatzwerkstoff ein Pulver mit der folgenden Grundzusammensetzung ist:
**Tabelle 1**
| Element | Gew.-% bezogen auf das Gesamtgewicht des Pulvers |
|---|---|
| C | 0,3 - 2,5 |
| Si | 1,5 - 3,0 |
| B | 0,1 - 3,5 |
| Ni | 3,5 - 5,5 |
| Cr | 5 - 17 |
| V | 10 - 17,5 |
| Fe | > 50 % und quantum satis 100 % |
dadurch, dass der Laser eine Betriebswellenlänge zwischen 900 nm und 1100 nm hat, und dadurch, dass es die Bestrahlung des Teils durch einen Laserstrahl derart umfasst, dass die Energiedichte (Em), das Verhältnis der Laserleistung zum Pulvermassenstrom, 5 J/mg bis 10 J/mg beträgt und dass die längenbezogene Masse (Ml), das Verhältnis des Pulvermassenstroms zur Abtastgeschwindigkeit des Lasers, 25 mg/mm bis 55 mg/mm beträgt.

2. Verfahren nach Anspruch 1, wobei das Pulver ein Gemisch ist aus
a. einem schmelzenden Metallpulver P1 auf Fe-Basis mit der folgenden Zusammensetzung:
**Tabelle 2**
| Element | Gew.-% bezogen auf das Gesamtgewicht des Pulvers P1 |
|---|---|
| C | 0,3 - 3 |
| Si | 2 - 3,0 |
| B | 2,5 - 4,0 |
| Ni | 4,0 - 6,0 |
| Cr | 12 - 16 |
| Fe | > 50 und quantum satis 100 % |
b. und einem feuerfesten und harten keramischen Pulver P2 mit der folgenden Zusammensetzung:
**Tabelle 3**
| Element | Gew.-% bezogen auf das Gesamtgewicht des Pulvers P2 |
|---|---|
| C | 10 / 20 |
| V | 80 / 90 |
und bevorzugt eine Vickers-Härte von 2000 HV_{0,1} bis 3000 HV_{0,1} hat.

3. Verfahren nach einem der Ansprüche 1 und 2, wobei das Pulver P1 eine Vickers-Härte von 800 HV_{0,2} bis 1400 HV_{0,2} hat.

4. Verfahren nach einem der Ansprüche 2 und 3, wobei das Pulver zwischen 10 Gew.-% und 30 Gew.-% von P2 und zwischen 90 Gew.-% und 70 Gew.-% von P1, bezogen auf das Gesamtgewicht der beiden Pulver P1+P2, umfasst.

5. Verfahren nach einem der vorhergehenden Ansprüche, wobei die Steigung 2,5 mm bis 4 mm beträgt und der Überdeckungsgrad 50 % bis 65 % beträgt.

6. Verfahren nach einem der vorhergehenden Ansprüche, wobei die Energiedichte 8 J/mg bis 11 J/mg oder 5 J/mg bis 8 J/mg beträgt und die längenbezogene Masse des Auftrags 30 mg/mm bis 50 mg/mm beträgt.

7. Verfahren nach einem der vorhergehenden Ansprüche, wobei der Lichtfleck des Lasers einen Durchmesser zwischen 4 mm und 7 mm hat.

8. Beschichtetes oder wiederbeschichtetes Metallteil, umfassend:
- ein Substrat auf Eisenbasis,
- einen Überzug, der auf das Substrat aufgebracht ist, enthaltend:
∘ mehr als 50 Vol.-% einer Matrix auf Fe-Basis,
∘ weniger als 50 Vol.-% feuerfeste und harte Phasen, wobei der Überzug die folgende Grundzusammensetzung hat:
**Tabelle 4**
| Element | Gew.-% bezogen auf das Gesamtgewicht des Pulvers |
|---|---|
| C | 0,3 - 2,5 |
| Si | 1,5 - 3,0 |
| B | 0,1 - 3,5 |
| Ni | 3,5 - 5,5 |
| Cr | 5 - 17 |
| V | 10 - 17,5 |
| Fe | > 50% und quantum satis 100% |
- und eine Wärmeeinflusszone (WEZ) im Substrat, an der Grenzfläche Substrat/Überzug, mit einer Dicke von weniger als 2 mm.

9. Teil nach Anspruch 8, wobei der Überzug nach dem Schleifen eine Dicke von 0,5 mm bis 1,2 mm hat.

10. Teil nach einem der Ansprüche 8 bis 9, wobei die feuerfesten und harten Phasen Vanadiumcarbide mit einer Größe von bevorzugt weniger als oder gleich 2,5 µm und Chromboride mit einer Größe von bevorzugt 3 µm bis 15 µm sind.

11. Teil nach einem der Ansprüche 8 bis 10, wobei der Überzug eine mittlere Härte von mehr als 750 HV_{0,2}, insbesondere mehr als 770 HV_{0,2}, insbesondere mehr als 800 HV_{0.2}, insbesondere mehr als 850 HV_{0.2} hat.

12. Teil nach einem der Ansprüche 8 bis 11, wobei die Wärmeeinflusszone eine Dicke von weniger als 1,5 mm, bevorzugt von weniger als oder gleich 1,2 mm hat.

13. Teil nach einem der Ansprüche 8 bis 12, wobei das Teil ein Extrusionszylinder ist, wobei der Überzug durch Wiederbeschichten eines Teils einer konkaven Fläche des Zylinders aufgebracht wird.

14. Teil nach einem der Ansprüche 8 bis 12, wobei das Teil eine Extrusionsschnecke ist, wobei der Überzug durch Wiederbeschichten der Scheitelwand mindestens eines erhabenen Teils der Extrusionsschnecke aufgebracht wird.

15. Fertiglegiertes Pulver mit der folgenden Grundzusammensetzung:
**Tabelle 1**
| Element | Gew.-% bezogen auf das Gesamtgewicht des Pulvers |
|---|---|
| C | 0,3 - 2,5 |
| Si | 1,5 - 3,0 |
| B | 0,1 - 3,5 |
| Ni | 3,5 - 5,5 |
| Cr | 5 - 17 |
| V | 10 - 17,5 |
| Fe | > 50% und quantum satis 100% |

## Claims

1. Process for surfacing or resurfacing a metal part by laser-assisted deposition of a filler material in order to produce an abradable coating of the part, the process being **characterized in that** the filler material is a powder having the following elemental composition:
**Table 1**
| Element | % by weight relative to the total weight of the powder |
|---|---|
| C | 0.3 - 2.5 |
| Si | 1.5 - 3.0 |
| B | 0.1 - 3.5 |
| Ni | 3.5 - 5.5 |
| Cr | 5 - 17 |
| V | 10 - 17.5 |
| Fe | > 50% and q.s. 100% |
**in that** the laser has an operational wavelength ranging from 900 nm to 1100 nm and **in that** it comprises the irradiation of the part by a laser beam such that the specific energy (Em), the ratio of the laser power to the mass flow rate of powder, varies from 5 J/mg to 10 J/mg and such that the linear density (MI), the ratio of the mass flow rate of powder to the laser scanning speed, varies from 25 mg/mm to 55 mg/mm.

2. Process according to Claim 1, wherein the powder is a mixture
a. of an Fe-based melt metal powder P1, of the following composition:
**Table 2**
| Element | % by weight relative to the total weight of the powder P1 |
|---|---|
| C | 0.3 - 3 |
| Si | 2 - 3.0 |
| B | 2.5 - 4.0 |
| Ni | 4.0 - 6.0 |
| Cr | 12 - 16 |
| Fe | > 50 and q.s. 100% |
b. and of a refractory and hard ceramic powder P2, of the following composition:
**Table 3**
| Element | % by weight relative to the total weight of the powder P2 |
|---|---|
| C | 10 - 20 |
| V | 80 - 90 |
and having preferably a Vickers hardness varying from 2000 HV_{0.1} to 3000 HV_{0.1}.

3. Process according to any one of Claims 1 and 2, wherein the powder P1 has a Vickers hardness varying from 800 HV_{0.2} to 1400 HV_{0.2}.

4. Process according to any one of Claims 2 and 3, wherein the powder comprises 10% to 30% by weight of P2 and, respectively, 90% to 70% by weight of P1, relative to the total weight of the mixture of the two powders P1 + P2.

5. Process according to any one of the preceding claims, wherein the pitch varies from 2.5 mm to 4 mm and the degree of coverage varies from 50% to 65%.

6. Process according to any one of the preceding claims, wherein the specific energy varies from 8 J/mg to 11 J/mg or from 5 J/mg to 8 J/mg and the linear density of the deposition varies from 30 mg/mm to 50 mg/mm.

7. Process according to any one of the preceding claims, wherein the laser spot has a diameter varying from 4 mm to 7 mm.

8. Surfaced or resurfaced metal part, comprising:
- an iron-based substrate,
- a coating, deposited on said substrate, containing
∘ more than 50% by volume of an Fe-based matrix,
∘ less than 50% by volume of refractory and hard phases, the coating having the following elemental composition:
**Table 4**
| Element | % by weight relative to the total weight of the coating |
|---|---|
| C | 0.3 - 2.5 |
| Si | 1.5 - 3.0 |
| B | 0.1 - 3.5 |
| Ni | 3.5 - 5.5 |
| Cr | 5 - 17 |
| V | 10 - 17.5 |
| Fe | > 50% and q.s. 100% |
- and a heat-affected zone (ZAT) in the substrate, at the substrate/coating interface, with a thickness of less than 2 mm.

9. Part according to Claim 8, wherein the coating has a thickness varying from 0.5 mm to 1.2 mm after rectification.

10. Part according to either one of Claims 8 and 9, wherein the refractory and hard phases are vanadium carbides having a size that is preferably less than or equal to 2.5 µm and chromium borides having a size that preferably varies between 3 µm and 15 µm.

11. Part according to any one of Claims 8 to 10, wherein the coating has a mean hardness of greater than 750 HV_{0.2}, in particular greater than 770 HV_{0.2}, in particular greater than 800 HV_{0.2}, in particular greater than 850 HV_{0.2}.

12. Part according to any one of Claims 8 to 11, wherein the heat-affected zone has a thickness of less than 1.5 mm, in particular less than or equal to 1.2 mm.

13. Part according to any one of Claims 8 to 12, wherein the part is an extrusion cylinder, the coating being deposited by resurfacing a portion of a concave face of the cylinder.

14. Part according to any one of Claims 8 to 12, wherein the part is an extrusion screw, the coating being deposited by resurfacing the top wall of at least one portion in relief of the extrusion screw.

15. Completely alloyed powder having the following elemental composition:
**Table 1**
| Element | % by weight relative to the total weight of the powder |
|---|---|
| C | 0.3 - 2.5 |
| Si | 1.5 - 3.0 |
| B | 0.1 - 3.5 |
| Ni | 3.5 - 5.5 |
| Cr | 5 - 17 |
| V | 10 - 17.5 |
| Fe | > 50% and q.s. 100% |
